# EUROPÄISCHE PATENTANMELDUNG

(11) **EP 1 217 766 A1**
(43) Veröffentlichungstag der Anmeldung: **26.06.2002**
(21) Anmeldenummer: 01130069.6
(22) Anmeldetag: 18.12.2001
(51) Int. Cl.: H04H 1/00

(54) **Multischalter-Kopfgerät, Satellitenempfangsanlage sowie Verfahren zur Installation einer Satellitenempfangsanlage**

(30) Priorität: 21.12.2000 DE 10064370
(71) Anmelder: Ankaro Otto Wolf KG, 44536 Lünen (DE)
(72) Erfinder: Rohde, Frank., 44269 Dortmund (DE); König, Andreas., 59348 Lüdingshausen (DE); Steue-Henkel, Martin., 59192 Berkamen (DE)
(74) Vertreter: Gesthuysen, von Rohr & Eggert

(57) **Zusammenfassung**

Dargestellt und beschrieben ist ein Multischalter-Kopfgerät (1) für eine Satellitenempfangsanlage (2) zum Anschluß mehrerer Teilnehmer an zwei Satellitenantennen (3), mit acht Eingängen (4) zum Anschließen zweier Konverter (5), mit einer Umschaltmatrix (6), mit acht Ausgängen (7) zum direkten oder indirekten Verbinden des Multischalter-Kopfgeräts (1) mit einem Multischalter-Stranggerät (8) und mit mehreren Anschlüssen (9) zum Anschließen der einzelnen Teilnehmer. Weiter dargestellt ist eine Satellitenempfangsanlage (2) zum Anschluß mehrerer Teilnehmer an zwei Satellitenantennen (3), mit zwei Konvertern (5), mit einem eine Umschaltmatrix (6) aufweisenden Multischalter-Kopfgerät (1) und mit zwei, je eine Umschaltmatrix (21) aufweisenden, Multischalter-Stranggeräten (8), wobei die einzelnen Ausgänge (7) des Multischalter-Kopfgeräts (1) über einzelne Leitungen (11) mit den Eingängen (22) der Multischalter-Stranggeräte (8) direkt oder indirekt verbunden sind.

Mit dem erfindungsgemäßen Multischalter-Kopfgerät (1) bzw. der erfindungsgemäßen Satellitenempfangsanlage (2) ist der Aufwand bei der Installationen der Satellitenempfangsanlage (2) dadurch besonders gering und das Risiko von Fehlern beim Anschließen einzelner Leitungen (11) besonders niedrig, daß dem Multischalter-Kopfgerät (1) eine Leitungs-Identifikationseinheit (10) zugeordnet ist und die Leitungs-Identifikationseinheit (10) Identifikationssignale auf an den Ausgängen (7) angeschlossene Leitungen (11) schaltet.

## Beschreibung

Die Erfindung betrifft ein Multischalter-Kopfgerät für eine Satellitenempfangsanlage zum Anschluß mehrerer Teilnehmer an mindestens eine Satellitenantenne gemäß dem Oberbegriff des Anspruchs 1. Daneben betrifft die Erfindung eine Satellitenempfangsanlage gemäß dem Oberbegriff des Anspruchs 7. Schließlich betrifft die Erfindung noch ein Verfahren zur Installation einer zuvor beschriebenen Satellitenempfangsanlage.

Die von den Satelliten abgestrahlten Signale werden mittels einer Satellitenantenne empfangen und auf den Eingang eines im Brennpunkt der Satellitenantenne angeordneten Konverters geführt. Der Konverter, welcher auch als LNB (Low Noise Block) oder LNC (Low Noise Converter) bezeichnet wird, verstärkt und konvertiert die Satellitensignale aus einem Bereich hoher Frequenz (in der Regel ca. 10 bis 13 GHz) in einen niedrigeren Zwischenfrequenzbereich von 950 bis 2.150 MHz. Zur besseren Ausnutzung des zur Verfügung stehenden Frequenzbereichs werden von den Satelliten Abstrahlungen auf verschiedenen Ebenen durchgeführt. Gängig ist hier die Abstrahlung auf einer horizontalen und einer vertikalen Ebene sowie die Aufteilung in ein unteres Frequenzband von 10,7 bis 11,7 GHz und ein oberes Frequenzband von 11,7 bis 12,75 GHz. Sollen mehrere Teilnehmer, d. h. mehrere Receiver an eine Satellitenantenne bzw. an den Konverter angeschlossen werden, so ist ein spezieller Konverter zum gleichzeitigen Empfang mehrerer Empfangsebenen notwendig. Hierzu werden sogenannte Universal-Quatro-LNBs verwendet, die vier Ausgänge aufweisen, an denen die jeweiligen Polarisationsebenen (horizontal bzw. vertikal) des unteren und des oberen Frequenzbereichs fest anstehen.

Damit die einzelnen Teilnehmer unabhängig von einander die verschiedenen Ausgänge des Konverters ansteuern bzw. die verschiedenen Empfangsebenen auswählen können, werden sogenannte Multischalter, die auch als Multiswitch oder Abzweigeinrichtung bezeichnet werden, zwischen den Konverter und die einzelnen Teilnehmer geschaltet. Jeder Teilnehmer kann dann durch Umschalten zwischen einem der vorstehend genannten vier Empfangsebenen auswählen. Die Umschaltung erfolgt dabei dadurch, daß vom Teilnehmer (Receiver) eine Schaltspannung, eine Schaltfrequenz oder ein serieller Steuercode auf den Multischalter gegeben wird. Eine in dem Multischalter ausgebildete Umschaltmatrix verbindet dabei den jeweiligen Teilnehmer entsprechend dem anstehenden Steuerungssignal mit dem entsprechenden Eingang des Multischalters.

Neben den zuvor beschriebenen Universal-Quatro-LNBs, bei denen an den vier Ausgängen die einzelnen Empfangsebenen fest anstehen, gibt es auch schaltbare Universal-Quatro-LNBs, bei denen durch Aufschalten einer Schaltspannung bzw. einer Schaltfrequenz auf die Leitung zwischen dem Universal-Quatro-LNB und dem Multischalter festgelegt wird, welche der Empfangsebenen am Ausgang des Universal-Quatro-LNBs anliegen soll.

Natürlich ist auch bei Verwendung eines Multischalters die Anzahl der anschließbaren Teilnehmer begrenzt, wobei Multischalter erhältlich sind, an die bis zu 16 Teilnehmer anschließbar sind. Sollen beispielsweise in einer großen Wohneinheit noch mehr Teilnehmer an eine Satellitenempfangsanlage angeschlossen werden, so werden kaskadierbare Systeme verwendet, bei denen mehrere Multischalter in Reihe geschaltet werden. In einem solchen kaskadierbaren System wird dann der Multischalter, der direkt mit dem Konverter oder den Konvertern verbunden ist, als Multischalter-Kopfgerät bezeichnet, während die nachfolgenden Multischalter als Multischalter-Stranggeräte bezeichnet werden. Diese Multischalter-Stranggeräte sind nun direkt oder indirekt mit dem Multischalter-Kopfgerät verbunden, indem die einzelnen Ausgänge des Multischalter-Kopfgeräts über Leitungen, die dann auch als Strangleitungen bezeichnet werden, mit den Eingängen des Multischalter-Stranggeräts verbunden sind. Da das Multischalter-Kopfgerät und die einzelnen Multischalter-Stranggeräte in Reihe zueinander geschaltet sind, kann natürlich nur das "erste" Multischalter-Stranggerät direkt mit dem Multischalter-Kopfgerät verbunden sein, d. h. die einzelnen Ausgänge des Multischalter-Kopfgeräts sind über Leitungen mit den einzelnen Eingängen des Multischalter-Stranggeräts verbunden. Nachfolgende Multischalter-Stranggeräte sind dann insofern indirekt mit dem Multischalter-Kopfgerät verbunden, als die Eingänge eines Multischalter-Stranggeräts über Leitungen mit den Ausgängen eines in der Reihenschaltung vorgeschalteten Multischalter-Stranggeräts verbunden sind. Bei einem derartigen kaskadierbaren System bilden somit das Multischalter-Kopfgerät und die nachfolgenden Multischalter-Stranggeräte den Kaskadenstamm, wobei an die einzelnen Multischalter jeweils mehrere Teilnehmer angeschlossen werden können. Da der Signalpegel der über die einzelnen Leitungen übertragenen Signale mit zunehmender Länge des Kaskadenstamms abnimmt, können zwischen einzelne Multischalter-Stranggeräte Verstärker geschaltet werden.

Wird von einem an einem Multischalter-Stranggerät angeschlossenen Teilnehmer eine Empfangsebene ausgewählt, so wird der Teilnehmer in Abhängigkeit des Steuerungssignals mit einem Eingang des Multischalter-Stranggeräts verbunden. Damit der Teilnehmer nun auch die Empfangsebene und damit das innerhalb der Empfangsebene konkret ausgewählte Fernseh- oder Rundfunkprogramm erhält, ist es zwingend erforderlich, daß an dem durch das Steuerungssignal ausgewähltem Eingang des Multischalter-Stranggeräts auch tatsächlich die Empfangsebene anliegt, die aufgrund der Programmierung des Empfängers bei dem entsprechenden Steuerungssignal erwartet wird. Damit diese Voraussetzung erfüllt ist, ist es somit zwingend notwendig, daß der jeweilige Eingang des Multischalter-Stranggeräts mit dem entsprechenden Ausgang des Multischalter-Kopfgeräts verbunden ist. Somit muß ein Vertauschen der Leitungen im Kaskadenstamm verhindert werden, was zu einem großen Aufwand bei der Verbindung der einzelnen Multischalter untereinander führt. Der Installateur muß darauf achten, daß er die jeweiligen Ausgänge des Kaskaden-Kopfgeräts mit den entsprechenden Eingängen des ersten Kaskaden-Stranggeräts verbindet. Ebenso müssen die entsprechenden Ausgänge des ersten Kaskaden-Stranggeräts mit den entsprechenden Eingängen des nächsten Kaskaden-Stranggeräts verbunden werden usw. In dem aus dem Multischalter-Kopfgerät, den Multischalter-Stranggeräten und ggf. den Verstärkern gebildeten Kaskadenstamm darf es somit an keiner Stelle zu einem Vertauschen der einzelnen Leitungen kommen.

Dies wird noch dadurch erschwert, daß die einzelnen Multischalter in der Regel an unterschiedlichen Orten, häufig auf unterschiedlichen Etagen, montiert werden. Im Stand der Technik erfolgt die richtige Zuordnung der einzelnen Leitungen zu den Eingängen bzw. Ausgängen der einzelnen Multischalter-Stranggeräten dadurch, daß die einzelnen Leitungen unterschiedlich beschriftet oder farblich markiert werden. Auch hierbei können jedoch nach wie vor Fehler auftreten, so daß es häufig erforderlich ist, die einzelnen Leitungen durchzumessen, um eine schaltungstechnisch richtige Zuordnung vornehmen zu können.

Der Erfindung liegt nun die Aufgabe zugrunde, den Aufwand bei der Installation einer eingangs beschriebenen Satellitenempfangsanlage zu verringern und nach Möglichkeit Fehler beim Anschließen der einzelnen Leitungen zu verhindern.

Diese Aufgabe ist bei dem eingangs beschriebenen Multischalter-Kopfgerät zunächst und im wesentlichen dadurch gelöst, daß dem Multischalter-Kopfgerät eine Leitungs-Identifikationseinheit zugeordnet ist und die Leitungs-Identifikationseinheit Identifikationssignale auf an den Ausgängen angeschlossene Leitungen schaltet. Dadurch, daß den einzelnen Leitungen unterschiedliche Identifikationssignale aufgeschaltet sind, kann festgestellt werden, an welchem Ausgang des Multischalter-Kopfgeräts die jeweilige Leitung angeschlossen ist. Ein Beschriften der einzelnen Leitung oder die Verwendung von Leitungen mit unterschiedlichen Farben oder Markierungen ist dabei nicht erforderlich. Dies führt zu einer Kostenersparnis, da nun nicht mehr unterschiedliche Leitungen mit unterschiedlichen Farben oder unterschiedlichen Markierungen auf Lager gehalten werden müssen.

Grundsätzlich bestehen beim Verbinden eines Multischalter-Kopfgeräts mit einem Multischalter-Stranggerät zwei Fehlermöglichkeiten. Zum einen kann das eine Ende der Leitung an den falschen Ausgang des Multischalter-Kopfgeräts angeschlossen werden, zum anderen kann das andere Ende der Leitung an den falschen Eingang des Multischalter-Stranggeräts angeschlossen werden.

Wenn, wie im Stand der Technik üblich, verschiedenfarbige Leitungen verwendet werden, so sind den einzelnen Ausgängen des Multischalter-Kopfgeräts bzw. den einzelnen Eingängen der Multischalter-Stranggeräte jeweils unterschiedlich farbige Leitungen zugeordnet. Der zuvor genannte erste Fehler tritt nun dann auf, wenn zwar das zweite Ende einer farbigen Leitung an den richtigen Eingang des Multischalter-Stranggeräts angeschlossen wird, das erste Ende der farbigen Leitung jedoch nicht an dem entsprechenden Ausgang des Multischalter-Kopfgeräts angeschlossen worden ist. Der zweite zuvor genannte Fehler liegt dagegen dann vor, wenn zwar das erste Ende der farbigen Leitung an den richtigen Ausgang des Multischalter-Kopfgeräts angeschlossen wird, nicht jedoch das zweite Ende der farbigen Leitung mit dem dazugehörigen Eingang des Multischalter-Stranggeräts verbunden wird.

Bei dem erfindungsgemäßen Multischalter-Kopfgerät ist nun die erste Fehlermöglichkeit ausgeschlossen, da die einzelnen Leitungen jeweils an einen beliebigen Ausgang des Multischalter-Kopfgeräts angeschlossen werden können. Die Unterscheidung der einzelnen Leitungen erfolgt erst dann, dann jedoch eindeutig, wenn die einzelnen Leitungen an den Ausgängen des Multischalter-Kopfgeräts angeschlossen worden sind und den einzelnen Leitungen Identifikationssignale aufgeschaltet werden. Die Auswertung anhand der Identifikationssignale, welche Leitung mit welchem Ausgang des Multischalter-Kopfgeräts verbunden ist, kann auf unterschiedliche Arten erfolgen, wozu auf die nachfolgende Beschreibung der erfindungsgemäßen Satellitenempfangsanlage bzw. des erfindungsgemäßen Verfahrens zur Installation einer Satellitenempfangsanlage verwiesen wird.

Vorteilhafterweise bestehen die Identifikationssignale aus Gleichspannungssignalen, niederfrequenten Wechsel- oder Pulsspannungen oder aus niederfrequenten Datentelegrammen. Hierdurch ist zum einen eine einfache Realisierung der Leitungs-Identifikationseinheit möglich, kann zum anderen auch die Auswertung der Identifikationssignale relativ einfach erfolgen. Der wesentliche Vorteil bei der Verwendung von niederfrequenten Identifikationssignalen besteht jedoch darin, daß durch die Aufschaltung von niederfrequenten Identifikationssignalen die wesentlich höherfrequenten Nutzsignale des Konverters im Zwischenfrequenzbereich, die über die Leitungen übertragen werden, unbeeinflußt bleiben. Gemäß einer vorteilhaften Ausgestaltung des erfindungsgemäßen Multischalter-Kopfgeräts sind zum Aufschalten der Identifikationssignale auf die an den Ausgängen angeschlossen Leitungen Drosselspulen vorgesehen. Drosselspulen weisen für niederfrequente Signale eine geringe Impedanz, für hochfrequente Signale dagegen eine hohe Impedanz auf. Dadurch, daß die einzelnen Leitungen über Drosselspulen mit der Leitungs-Identifikationseinheit verbunden sind, wird somit verhindert, daß sich die auf den einzelnen Leitungen übertragenen hochfrequenten Nutzsignale gegenseitig beeinflussen können.

Bei der eingangs beschriebenen Satellitenempfangsanlage zum Anschluß mehrerer Teilnehmer an mindestens eine Satellitenantenne ist die zuvor beschriebene Aufgabe ebenfalls zunächst dadurch gelöst, daß das Multischalter-Kopfgerät eine Leitungs-Identifikationseinheit aufweist und durch die Leitungs-Identifikationseinheit Identifikationssignale an den einzelnen Ausgängen des Multischalter-Kopfgeräts auf die Leitungen aufschaltbar sind. Wie zuvor bereits ausgeführt, gibt es nun verschiedene Möglichkeiten, aufgrund der unterschiedlichen auf den Leitungen aufgeschalteten Identifikationssignale die Zuordnung der einzelnen Leitungen zu den Ausgängen des Multischalter-Kopfgeräts festzustellen.

Gemäß einer ersten besonders vorteilhaften Ausgestaltung der erfindungsgemäßen Satellitenempfangsanlage weist jedes Multischalter-Stranggerät eine Auswerteelektronik auf, wobei die Auswerteelektronik einerseits mit den Eingängen und andererseits mit der Umschaltmatrix des Multischalter-Stranggeräts verbunden ist und die Auswerteelektronik die Identifikationssignale der an den Eingängen angeschlossenen Leitungen erfaßt und aufgrund der unterschiedlichen Identifikationssignale die Konfiguration der angeschlossenen Leitungen ermittelt. Bei dieser besonders bevorzugten Ausgestaltung der erfindungsgemäßen Satellitenempfangsanlage können die einzelnen Leitungen völlig beliebig an die Eingänge des Multischalter-Stranggeräts angeschlossen werden. Ein Fehler bei der Installation ist ausgeschlossen.

Die in jedem Multischalter-Stranggerät realisierte Auswerteelektronik stellt zum einen aufgrund der unterschiedlichen Identifikationssignale fest, mit welchem Ausgang des Multischalter-Kopfgeräts die jeweilige Leitung verbunden ist, gibt zum anderen an die Umschaltmatrix des Multischalter-Stranggeräts die Information weiter, an welchem Eingang des Multischalter-Stranggeräts diese Leitung anliegt. Anders als im Stand der Technik ist somit bei dieser bevorzugten Ausgestaltung der erfindungsgemäßen Satellitenempfangsanlage keine feste Zuordnung der einzelnen Eingänge des Multischalter-Stranggeräts zu den einzelnen Ausgängen des Multischalter-Kopfgeräts notwendig. Wenn beispielsweise ein Teilnehmer durch das Anliegen eines bestimmten Steuerungssignals an das Multischalter-Stranggerät eine Empfangsebene auswählt, die gemäß der Programmierung des Teilnehmers am zweiten Eingang des Multischalter-Stranggeräts anliegen müßte, so ist in der Auswerteelektronik die Information vorhanden, welcher Eingang des Multischalter-Stranggeräts tatsächlich mit dem zweiten Ausgang des Multischalter-Kopfgeräts verbunden ist. Entsprechend wird der Teilnehmer dann nicht mit dem zweiten Eingang des Multischalter-Stranggeräts verbunden, sondern mit dem Eingang, der tatsächlich mit dem zweiten Ausgang des Multischalter-Kopfgeräts verbunden ist.

Gemäß einer bevorzugten Ausgestaltung der zuvor beschriebenen Satellitenempfangsanlage sind die Steuerung der Umschaltmatrix und die Auswerteelektronik durch Mikroprozessoren bzw. durch einem Mikroprozessor realisiert. Ein solcher Mikroprozessor kann dann auch sämtliche Auswerte- und Steuerungsfunktionen übernehmen.

Gemäß einer zweiten alternativen Ausgestaltung der erfindungsgemäßen Satellitenempfangsanlage weist jedes Multischalter-Stranggerät eine Indikatoreinrichtung auf, wobei die Indikatoreinrichtung mit den Eingängen des Multischalter-Stranggeräts verbunden ist und die Indikatoreinrichtungen die Identifikationssignale der an den Eingängen angeschlossenen Leitungen erfaßt und ein Zuordnungssignal abgibt.

Diese Ausgestaltung der erfindungsgemäßen Satellitenempfangsanlage unterscheidet sich von der zuvor beschriebenen Satellitenempfangsanlage, bei der jedes Multischalter-Stranggerät eine Auswerteelektronik aufweist, im wesentlichen dadurch, daß am Ende des Installationsvorganges die einzelnen Eingänge der Multischalter-Stranggeräte mit den entsprechenden Ausgängen des Multischalter-Kopfgeräts verbunden sein müssen, wobei die in den Multischalter-Stranggeräten angeordnete Indikatoreinrichtung als Installationshilfe dient. Im Unterschied zur ersten Ausgestaltung der erfindungsgemäßen Satellitenempfangsanlage können bei dieser Ausgestaltung die Leitungen somit nicht beliebig an die Eingänge der Multischalter-Stranggeräte angeschlossen werden.

Durch die Anordnung der Indikatoreinrichtung in jedem Multischalter-Stranggerät werden die auf den einzelnen Leitungen aufgeschalteten Identifikationssignale ausgewertet und beim Anschließen einer Leitung an einen Eingang eines Multischalter-Stranggeräts wird dem Installateur durch ein Zuordnungssignal angezeigt, ob er die Leitung an den richtigen Eingang angeschlossen hat.

Gemäß einer ersten vorteilhaften Ausgestaltung der Indikatoreinrichtung ist jedem Eingang des Multischalter-Stranggeräts ein Zuordnungselement, insbesondere eine LED, zugeordnet. Die einzelnen LEDs sind dabei so geschaltet, daß sie nur dann aufleuchten, wenn an dem zugehörigen Eingang die richtige Leitung angeschlossen ist, wobei eine Aussage, ob die richtige Leitung angeschlossen ist oder nicht, aufgrund der auf die Leitung aufgeschalteten Identifikationssignale erfolgt.

Gemäß einer alternativen Ausgestaltung der Indikatoreinrichtung weist diese nur ein Zuordnungselement auf, wobei dieses Zuordnungselement über ein Schaltelement wahlweise mit den einzelnen Eingängen des Multischalter-Stranggeräts verbunden werden kann. Eine solche Ausgestaltung der Indikatoreinrichtung hat den Vorteil, daß nur ein Zuordnungselement, beispielsweise eine LED, verwendet werden muß. Dafür ist jedoch aufgrund der Verwendung eines Schaltelements ein etwas höherer Verdrahtungsaufwand innerhalb der Indikatoreinrichtung notwendig. Der Vorteil einer Indikatoreinrichtung, bei der jedem Eingang des Multischalter-Stranggeräts eine LED zugeordnet ist, besteht darüber hinaus darin, daß der Installateur am Ende des Installationsvorganges auf einen Blick feststellen kann, ob alle Eingänge eines Multischalter-Stranggeräts mit den richtigen Leitungen verbunden sind. Dies ist nämlich nur dann der Fall, wenn alle LEDs der Indikatoreinrichtung leuchten, vorausgesetzt, daß die LEDs so beschaltet sind, daß sie dann aufleuchten, wenn die richtige Leitung an dem entsprechenden Eingang angeschlossen ist.

Bei dem eingangs beschriebenen Verfahren wird die der Erfindung zugrundeliegende Aufgabe zunächst und im wesentlichen dadurch gelöst, daß den einzelnen an den Ausgängen des Multischalter-Kopfgeräts angeschlossenen Leitungen jeweils ein von einer Leitungs-Identifikationseinheit erzeugtes Identifikationssignal aufgeschaltet wird. Hierbei gibt es nun verschiedene Alternativen, wie die auf den Leitungen aufgeschalteten Identifikationssignale ausgewertet werden können und wie die daraus gewonnene Information, mit welchem Ausgang des Multischalter-Kopfgeräts die jeweilige Leitung verbunden ist, ausgewertet und verarbeitet wird.

Nachfolgend sollen vier alternative Ausgestaltungen des erfindungsgemäßen Verfahrens kurz beschrieben werden, wobei sich die einzelnen Verfahren durch einen unterschiedlichen Installationskomfort unterscheiden.

Bei einer ersten, besonders bevorzugten Ausgestaltung des erfindungsgemäßen Verfahrens werden die einzelnen Leitungen an die Eingänge eines Multischalter-Stranggeräts angeschlossen, wird anschließend die Konfiguration der Leitungen in einer Auswerteelektronik in dem Multischalter-Stranggerät aufgrund der unterschiedlichen Identifikationssignale auf den unterschiedlichen Leitungen erkannt und wird schließlich die vorliegende Konfiguration der Leitungen in der Umschaltmatrix des Multischalter-Stranggeräts berücksichtigt. Bei dieser Ausgestaltung des erfindungsgemäßen Verfahrens kann ein Fehler bei der Installation der einzelnen Multischalter-Stranggeräte somit deshalb nicht mehr auftreten, weil jede Leitung an jeden Eingang eines Multischalter-Stranggeräts angeschlossen werden kann. Ein Vertauschen der Leitungen führt somit nicht mehr zu einer Fehlfunktion, da das Vertauschen der Leitungen durch die Auswerteelektronik erkannt wird und beim Durchschalten eines Teilnehmers zu einem bestimmten Eingang des Multischalter-Stranggeräts mit Hilfe der Umschaltmatrix berücksichtigt wird.

Gemäß einer ersten alternativen Ausgestaltung des erfindungsgemäßen Verfahrens werden die Leitungen nacheinander an die Eingänge eines Multischalter-Stranggeräts angeschlossen, wobei eine mit den Eingängen verbundene Indikatoreinrichtung im Multischalter-Stranggerät ein Zuordnungssignal abgibt, wenn eine Leitung mit dem richtigen Eingang verbunden wird. Bei dieser Ausgestaltung des erfindungsgemäßen Verfahrens ist es somit nach wie vor notwendig, die einzelnen Leitungen an die richtigen Eingänge des Multischalter-Stranggeräts anzuschließen, wobei eine Überwachung, ob die Leitung an den richtigen Eingang angeschlossen ist, durch die Indikatoreinrichtung des Multischalter-Stranggeräts vorgenommen wird. Die Indikatoreinrichtung stellt somit eine Installationshilfe dar, welche in jedem Multischalter-Stranggerät integriert ist.

Bei einer weiteren alternativen Ausgestaltung des erfindungsgemäßen Verfahrens werden die einzelnen Leitungen nacheinander an einen Eingang eines Leitungsindikators angeschlossen, wobei der Leitungsindikator aufgrund der unterschiedlichen Identifikationssignale auf den unterschiedlichen Leitungen erkennt, mit welchem Ausgang des Multischalter-Kopfgeräts die jeweilige Leitung verbunden ist, und ein entsprechendes Signal anzeigt. Auch bei dieser alternativen Ausgestaltung des erfindungsgemäßen Verfahrens wird somit eine Installationshilfe verwendet, wobei die Installationshilfe hierbei jedoch nicht in dem Multischalter-Stranggerät integriert ist, sondern als separates Gerät ausgebildet ist. Der als Installationshilfe ausgebildete Leitungsindikator weist vorteilhafterweise mehrere LEDs und/oder ein Anzeigedisplay, insbesondere ein LCD-Display oder ein LED-Display auf.

Gemäß einer letzten alternativen Ausgestaltung des erfindungsgemäßen Verfahrens, die hier noch kurz angesprochen werden soll, werden die Leitungen nacheinander an einen Eingang eines Leitungsindikators angeschlossen, wobei der Leitungsindikator aufgrund der unterschiedlichen Identifikationssignale auf den unterschiedlichen Leitungen ein dem jeweiligen Identifikationssignal proportionales Signal anzeigt. Auch bei dieser Alternative wird somit eine externe Installationshilfe verwendet, wobei der als Installationshilfe dienende Leitungsindikator jedoch lediglich ein dem jeweiligen auf der Leitung aufgeschalteten Identifikationssignal proportionales Signal - beispielsweise eine Spannung, einen Strom oder einen Widerstandswert - anzeigt. Die richtige Zuordnung der durch den Leitungsindikator angezeigten Signale zu den jeweiligen Eingängen der Multischalter-Stranggeräte muß hierbei vom Installateur vorgenommen werden, wofür diesem entweder eine entsprechende Tabelle zur Verfügung steht oder die jeweiligen Signale an den jeweiligen Eingängen des Multischalter-Stranggeräts aufgedruckt sind. Für einen derartigen Leitungsindikator kann beispielsweise ein handelsübliches Spannungs- Strom- oder Widerstandsmeßgerät verwendet werden. Wird ein Spannungsmeßgerät verwendet, so kann dies einfach die auf den einzelnen Leitungen aufgeschalteten Identifikationssignale in Form von niederfrequenten Spannungen oder Gleichspannungen anzeigen.

Im einzelnen gibt es nun eine Vielzahl von Möglichkeiten, das erfindungsgemäße Multischalter-Kopfgerät, die erfindungsgemäße Satellitenempfangsanlage und das erfindungsgemäße Verfahren zur Installation einer Satellitenempfangsanlage auszugestalten und weiterzubilden. Hierzu wird verwiesen einerseits auf die den Patentansprüchen 1, 7 und 15 nachgeordneten Patentansprüche, andererseits auf die Beschreibung bevorzugter Ausführungsbeispiele in Verbindung mit der Zeichnung. In der Zeichnung zeigen
- Fig. 1: schematisch eine Ausführungsform eines erfindungsgemäßen Multischalter-Kopfgeräts für eine Satellitenempfangsanlage,
- Fig. 2: ein Blockschaltbild einer fertig installierten Satellitenempfangsanlage mit einem erfindungsgemäßen Multischalter-Kopfgerät,
- Fig. 3: eine schematische Darstellung einer bevorzugten Ausgestaltung eines Multischalter-Stranggeräts der erfindungsgemäßen Satellitenempfangsanlage,
- Fig. 4: ein Blockschaltbild einer fertig installierten Satellitenempfangsanlage mit einem erfindungsgemäßen Multischalter-Kopfgerät und einem Multischalter-Stranggerät gemäß Fig. 3,
- Fig. 5: eine schematische Darstellung einer weiteren Ausgestaltung eines Multischalter-Stranggeräts der erfindungsgemäßen Satellitenempfangsanlage,
- Fig. 6: zwei Ausführungsbeispiele eines Leitungsindikators zur Verwendung bei einer Ausgestaltung des erfindungsgemäßen Verfahrens zur Installation einer Satellitenempfangsanlage,
- Fig. 7: eine schematische Darstellung eines weiteren Ausführungsbeispiels eines Multischalter-Stranggeräts einer erfindungsgemäßen Satellitenempfangsanlage und
- Fig. 8: eine schematische Darstellung eines Verstärkers als Teil einer erfindungsgemäßen Satellitenempfangsanlage.

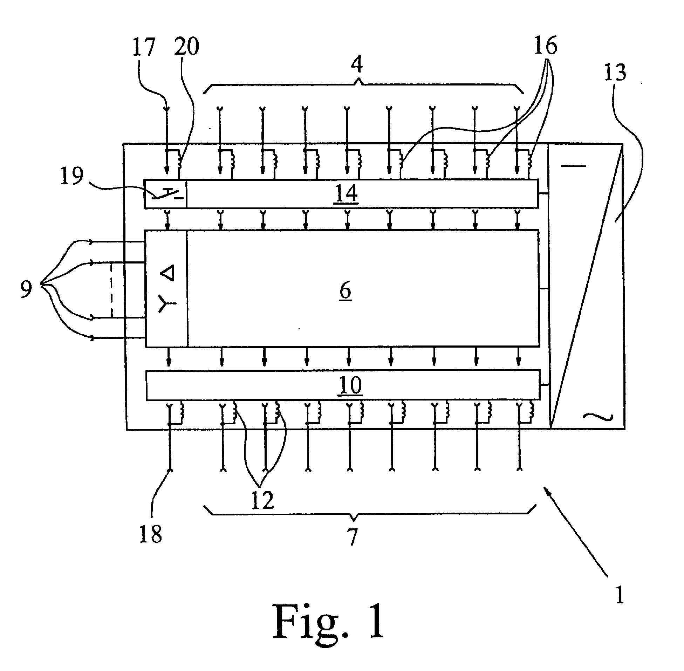

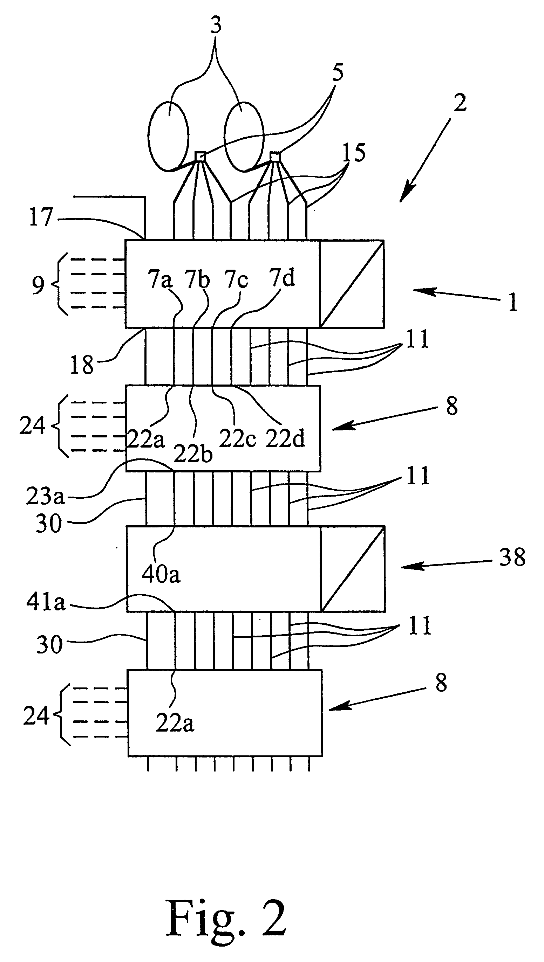

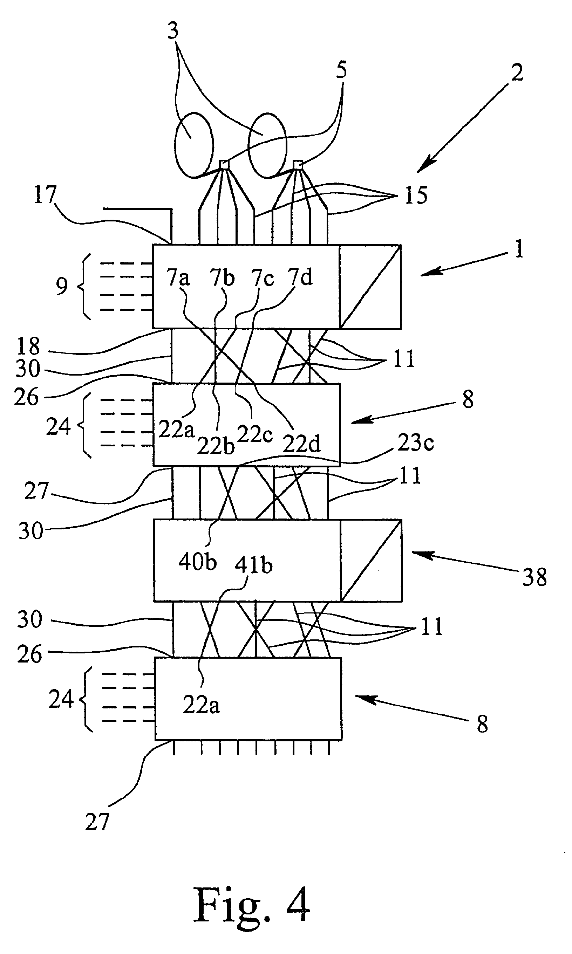

Fig. 1 zeigt eine schematische Darstellung eines Multischalter-Kopfgeräts 1 für eine in den Fig. 2 und 4 dargestellte Satellitenempfangsanlage 2. Mit Hilfe des Multischalter-Kopfgeräts 1 können mehrere - hier nicht dargestellte - Teilnehmer (Receiver) beispielsweise an zwei Satellitenantennen 3 angeschlossen werden. Das in Fig. 1 schematisch dargestellte Multischalter-Kopfgerät 1 weist insgesamt acht Eingänge 4 auf, an die zwei im Brennpunkt jeweils einer Satellitenantenne 3 angeordnete Konverter 5 mit ihren je vier Ausgängen angeschlossen sind.

Das Multischalter-Kopfgerät 1 weist eine Umschaltmatrix 6 auf, mit deren Hilfe die einzelnen Teilnehmer mit jedem Eingang 4 des Multischalter-Kopfgeräts 1 verbunden werden können. Die Auswahl des entsprechenden Eingangs 4 erfolgt dabei dadurch, daß von dem Teilnehmer ein bestimmtes Steuerungssignal auf das Multischalter-Kopfgerät 1 gegeben wird, wobei jedem Steuerungssignal in der Umschaltmatrix 6 ein bestimmter Eingang 4 zugewiesen ist. Das Multischalter-Kopfgerät 1 weist eine der Anzahl der Eingänge 4 entsprechende Anzahl von Ausgängen 7 auf, über die weitere Multischalter, sogenannte Multischalter-Stranggeräte 8 der Satellitenempfangsanlage 2 mit den Satellitenantennen 3 verbunden werden können. Die einzelnen Eingänge 4 des Multischalter-Kopfgeräts 1 sind dabei jeweils nur mit einem Ausgang 7 verbunden, während die Anschlüsse 9 für die Teilnehmer - wie bereits ausgeführt - über die Umschaltmatrix 6 mit jedem Eingang 4 des Multischalter-Kopfgeräts 1 verbunden werden können.

Erfindungsgemäß weist das Multischalter-Kopfgerät 1 eine Leitungs-Identifikationseinheit 10 auf, welche unterschiedliche Identifikationssignale auf die an den Ausgängen 7 angeschlossenen Leitungen 11 schaltet. Bei diesen Identifikationssignalen handelt es sich vorteilhafterweise um Gleichspannungssignale oder um niederfrequente Wechsel- oder Pulsspannungen, welche über Drosselspulen 12 auf die Leitungen 11 aufgeschaltet werden. Durch die Verwendung der Drosselspulen 12 wird verhindert, daß es zu einer Beeinflussung der auf den Leitungen 11 übertragenen hochfrequenten Nutzsignale kommt, welche von den Konvertern 5 kommend an den Eingängen 4 des Multischalter-Kopfgeräts 1 anstehen.

Das Multischalter-Kopfgerät 1 weist eine Spannungsversorgungseinrichtung 13 auf, die zum einen die Leitungs-Identifikationseinheit 10 und zum anderen eine Versorgungseinheit 14 mit Spannung versorgt. Über die Versorgungseinheit 14 werden zum einen die Konverter 5 mit elektrischer Energie versorgt, können zum anderen auch schaltbare Konverter 5 an die Eingänge 4 des Multischalter-Kopfgeräts 1 angeschlossen werden, bei denen durch Aufschalten einer Schaltspannung bzw. einer Schaltfrequenz auf die Leitungen 15 zum Konverter 5 festgelegt wird, welche Empfangsebene am entsprechenden Ausgang des Konverters 5 und damit am entsprechenden Eingang 4 am Multischalter-Kopfgerät 1 anliegen soll. Auch die von der Versorgungseinheit 14 zur Verfügung gestellten niederfrequenten Steuerungssignale werden über Drosselspulen 16 auf die Leitungen 15 aufgeschaltet.

Darüber hinaus weist das in Fig. 1 dargestellte Multischalter-Kopfgerät 1 - wie im Stand der Technik üblich - neben den acht Eingängen 4 zum Anschluß der zwei Konverter 5 einen terrestischen Eingang 17 zum Empfang von terrestischen Signalen auf. Um die terrestischen Signale auch den nachgeschalteten Multischalter-Stranggeräten 8 zur Verfügung stellen zu können, weist das Multischalter-Kopfgerät 1 auch einen terrestischen Ausgang 18 auf. Wegen des unterschiedlichen Frequenzbereichs der terrestischen Signale und der von den Konvertern 5 kommenden Satellitensignale werden die terrestischen Signale in der Regel nicht über die Umschaltmatrix 6 den einzelnen Teilnehmern zur Verfügung gestellt, sondern liegen permanent an allen Anschlüssen 9 des Multischalter-Kopfgeräts 1 an. Über einen Schalter 19 kann bei Bedarf eine Fernspeisespannung auf den terrestischen Eingang 17 geschaltet werden, mit der dann - hier nicht dargestellte - ferngespeiste Verstärker oder Kameramodule versorgt werden können. Diese Fernspeisespannung wird dann auch über eine Drosselspule 20 auf den terrestischen Eingang 17 geschaltet.

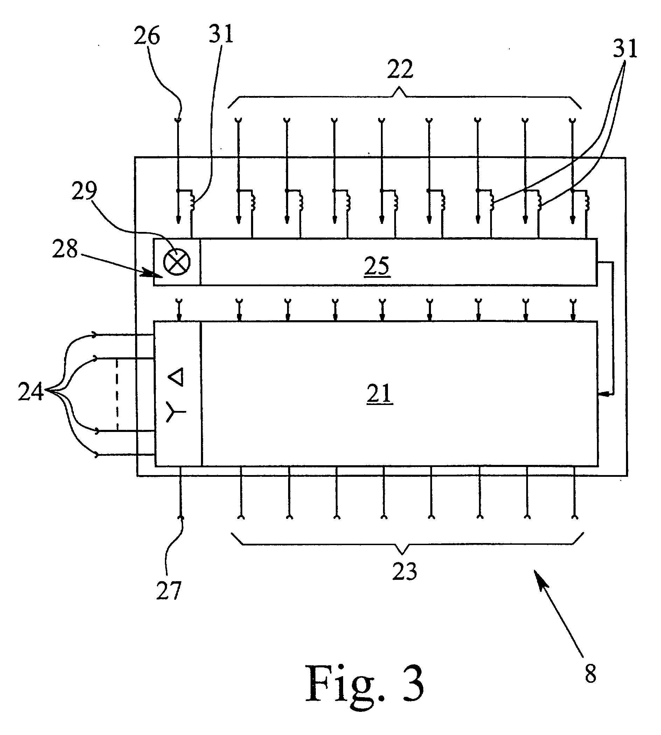

Die in den Fig. 3, 5 und 7 dargestellten verschiedenen Ausführungsformen der Multischalter-Stranggeräte 8 weisen ebenso wie das Multischalter-Kopfgerät 1 eine Umschaltmatrix 21, acht Eingänge 22, acht Ausgänge 23 und mehrere Anschlüsse 24 auf. Die an den Anschlüssen 24 angeschlossenen Teilnehmer können ebenso wie die an dem Multischalter-Kopfgerät 1 angeschlossenen Teilnehmer mit Hilfe von Steuerungssignalen und der Umschaltmatrix 21 mit jedem Eingang 22 des Multischalter-Stranggeräts 8 verbunden werden. Damit nun an den Eingängen 22 der Multischalter-Stranggeräte 8 auch tatsächlich die Empfangsebenen anliegen, die von dem Teilnehmer über das Steuerungssignal ausgewählt worden sind, ist es bisher zwingend erforderlich, daß der jeweilige Eingang 22 des Multischalter-Stranggeräts 8 mit dem entsprechenden Ausgang 7 des Multischalter-Kopfgeräts 1 direkt oder indirekt verbunden ist. Dies bedeutet, daß bisher ein Vertauschen der Leitungen 11 zwischen dem Multischalter-Kopfgerät 1 und dem ersten Multischalter-Stranggerät 8 für eine richtige Funktionsweise der Satellitenempfangsanlage 2 unbedingt verhindert werden mußte. Das gleiche gilt natürlich ebenso für die zwischen weiteren Multischalter-Stranggeräten 8 vorhandenen Leitungen 11. Fig. 2 zeigt eine Satellitenempfangsanlage 2 mit einer bisher erforderlichen Leitungsführung, bei der der Ausgang 7a des Multischalter-Kopfgeräts 1 mit dem Eingang 22a des ersten Multischalter-Stranggeräts 8 und der erste Eingang 22a eines weiteren Multischalter-Stranggeräts 8 ebenfalls mit dem ersten Ausgang 23a des ersten Multischalter-Stranggeräts 8 verbunden sein muß. Ein Vertauschen einer Leitung 11, egal an welcher Stelle innerhalb des Kaskadenstamms, führt somit zu einer Fehlfunktion der Satellitenempfangsanlage 2.

Gemäß einer besonders vorteilhaften Ausgestaltung der erfindungsgemäßen Satellitenempfangsanlage 2 können nun die einzelnen Leitungen 11 beliebig zwischen dem Multischalter-Kopfgerät 1 und dem Multischalter-Stranggerät 8 bzw. den Multischalter-Stranggeräten 8 angeschlossen werden. Hierzu weist ein Multischalter-Stranggerät 8 gemäß Fig. 3 eine Auswerteelektronik 25 auf, wobei die Auswerteelektronik 25 einerseits mit den Eingängen 22 und andererseits mit der Umschaltmatrix 21 des Multischalter-Stranggeräts 8 verbunden ist. In der Auswerteelektronik 25 werden die Identifikationssignale der an den Eingängen 22 angeschlossenen Leitungen 11 erfaßt und aufgrund der unterschiedlichen Identifikationssignale die Konfiguration der angeschlossenen Leitungen 11 ermittelt. Bei Verwendung eines derartigen Multischalter-Stranggeräts 8 in einer erfindungsgemäßen Satellitenempfangsanlage 2 können die einzelnen Leitungen 11 somit völlig beliebig an die Eingänge 22 des Multischalter-Stranggeräts 8 angeschlossen werden. Eine solche installierte Satellitenempfangsanlage 2 ist in Fig. 4 als Blockschaltbild dargestellt.

Bei dieser Satellitenempfangsanlage 2 ist beispielsweise der Ausgang 7a des Multischalter-Kopfgeräts 1 nicht - wie eigentlich erforderlich - mit dem Eingang 22a des ersten Multischalter-Stranggeräts 8, sondern mit dessen Eingang 22d verbunden. Dieses "Vertauschen" der Leitung 11 wird jedoch durch die Auswerteelektronik 25 in dem Multischalter-Stranggerät 8 erkannt und beim Durchschalten eines Teilnehmers mit Hilfe der Umschaltmatrix 21 berücksichtigt.

Wählt ein Teilnehmer ein bestimmtes Rundfunk- oder Fernsehprogramm, so wird gemäß einer in dem Teilnehmer vorhandenen Programmierung ein bestimmtes Steuerungssignal an das Multischalter-Stranggerät 8 gesendet. Dieses Steuerungssignal würde nun normalerweise dafür sorgen, daß die Umschaltmatrix 21 den Teilnehmer beispielsweise mit dem Eingang 22a des Multischalter-Stranggeräts 8 verbindet, da die Umschaltmatrix 21 die das ausgewählte Rundfunk- oder Fernsehprogramm enthaltene Empfangsebene am Eingang 22a erwartet. Nun ist jedoch in der Auswerteelektronik 25 die Information vorhanden, daß der Ausgang 7a des Multischalter-Kopfgeräts 1 nicht mit dem Eingang 22a sondern mit dem Eingang 22d des Multischalter-Stranggeräts 8 verbunden ist. Aufgrund dieser Information wird nun der Anschluß 24 des Teilnehmers nicht mit dem Eingang 22a, sondern mit dem Eingang 22d - an welchem die gewünschte Empfangsebene tatsächlich anliegt - verbunden. Bei einer erfindungsgemäßen Satellitenempfangsanlage, mit einem eine Leitungs-Identifikationseinheit 10 aufweisenden Multischalter-Kopfgerät 1 und einem, eine Auswerteelektronik 25 aufweisenden Multischalter-Stranggerät 8 ist somit ein Vertauschen einzelner Leitungen 11 unproblematisch. Dabei spielt es keine Rolle, an welcher Stelle des Kaskadenstamms eine Leitung 11 vertauscht wird. Durch die Auswerteelektronik 25 ist in jedem Multischalter-Stranggerät 8 die Information vorhanden, welcher Eingang 22 mit welchem Ausgang 7 und damit auch mit welchem Eingang 4 des Multischalter-Kopfgeräts 1 verbunden ist. So ist beispielsweise in dem ersten Multischalter-Kopfgerät 8 die Information vorhanden, daß der Ausgang 7d des Multischalter-Kopfgeräts 1 mit dem Eingang 22c des Multischalter-Stranggeräts 8 verbunden ist. Das zweite Multischalter-Stranggerät 8 hat dagegen durch seine Auswerteelektronik 25 die Information, daß bei ihm der Ausgang 7d des Multischalter-Kopfgeräts 1 mit dem Eingang 22a verbunden ist.

Ebenso wie das Multischalter-Kopfgerät 1 weist auch das Multischalter-Stranggerät 8 einen terrestischen Eingang 26 und einen terrestischen Ausgang 27 auf. Dem terrestischen Eingang 26 ist eine Anzeigeeinrichtung 28 mit einer LED 29 zugeordnet, mit dessen Hilfe angezeigt wird, wenn die terrestische Leitung 30 mit dem terrestischen Eingang 26 verbunden ist. Bei dieser Ausführung des Kaskaden-Stranggeräts 8 wird somit unterschieden zwischen den Leitungen 11, über die die Nutzsignale der Satellitenantennen 3 übertragen werden, und der terrestischen Leitung 30 über die Signale einer terrestischen Antenne oder eines Breitband-Kabelnetzes übertragen werden. Während die Leitungen 11 an einen beliebigen Eingang 22 angeschlossen werden können, muß die terrestische Leitung 30 zwingend an den terrestischen Eingang 26 angeschlossen werden. Zwar ist es grundsätzlich möglich, auch den terrestischen Eingang 26 mit der Auswerteelektronik 25 zu verbinden, dies würde jedoch aufgrund der unterschiedlichen Signalpegel und der unterschiedlichen Frequenzen der terrestischen Signale einerseits und der Satellitensignale andererseits zu einem aufwendigeren Aufbau der Auswerteelektronik 25 führen.

Schließlich sind bei dem Multischalter-Stranggerät 8 gemäß Fig. 3 die Leitungen 11 bzw. die terrestische Leitung 30 über Drosselspulen 31 mit der Auswerteelektronik 25 bzw. der Anzeigeeinrichtung 28 verbunden, um eine Beeinflussung der hochfrequenten Nutzsignale zu verhindern.

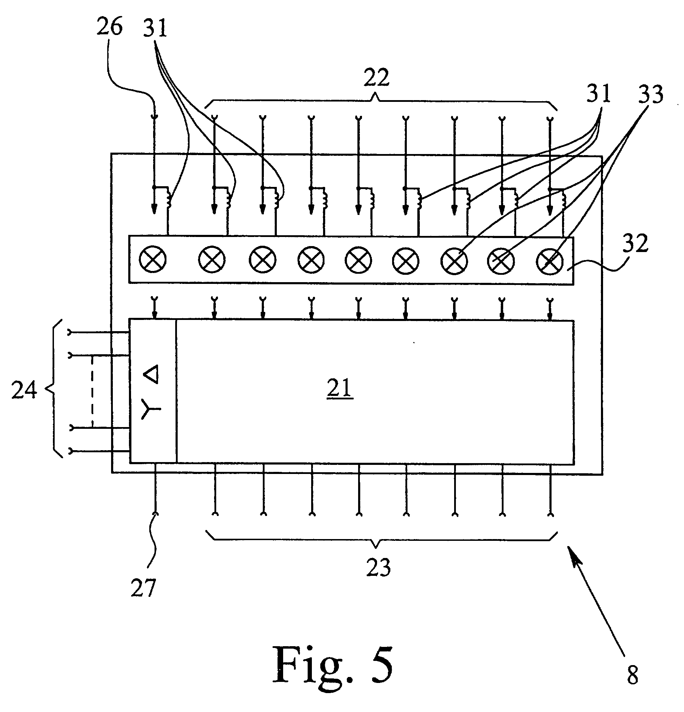

Bei einer alternativen Ausgestaltung der erfindungsgemäßen Satellitenempfangsanlage 2 gemäß Fig. 5 weist jedes Multischalter-Stranggerät 8 eine Indikatoreinrichtung 32 auf, die über Drosselspulen 31 mit den Eingängen 22 bzw. dem terrestischen Eingang 26 des Multischalter-Stranggeräts 8 verbunden ist. Die Indikatoreinrichtung 32 weist insgesamt neun LEDs 33 auf, wobei jedem Eingang 22 und dem terrestischen Eingang 26 genau eine LED 33 zugeordnet ist. Die einzelnen LEDs 33 sind dabei so beschaltet, daß sie nur dann aufleuchten, wenn an dem zugehörigen Eingang 22 die richtige Leitung 11 angeschlossen ist, wobei die Aussage, ob die richtige Leitung 11 angeschlossen ist oder nicht, aufgrund der auf der Leitung 11 aufgeschalteten Identifikationssignale erfolgt. Entsprechend leuchtet die dem terrestischen Eingang 26 zugeordnete LED 33 nur dann, wenn an dem terrestischen Eingang 26 die terrestische Leitung 30 angeschlossen ist.

Bei einer solchen Ausgestaltung der erfindungsgemäßen Satellitenempfangsanlage 2, die im fertig installierten Zustand in Fig. 2 dargestellt ist, können die Leitungen 11 somit nicht an beliebige Eingänge 22 der Multischalter-Stranggeräte 8 angeschlossen werden. Die notwendige richtige Installation der einzelnen Leitungen 11 wird jedoch durch die Indikatoreinrichtung 32 wesentlich erleichtert, da die Indikatoreinrichtung 32 als Installationshilfe dient.

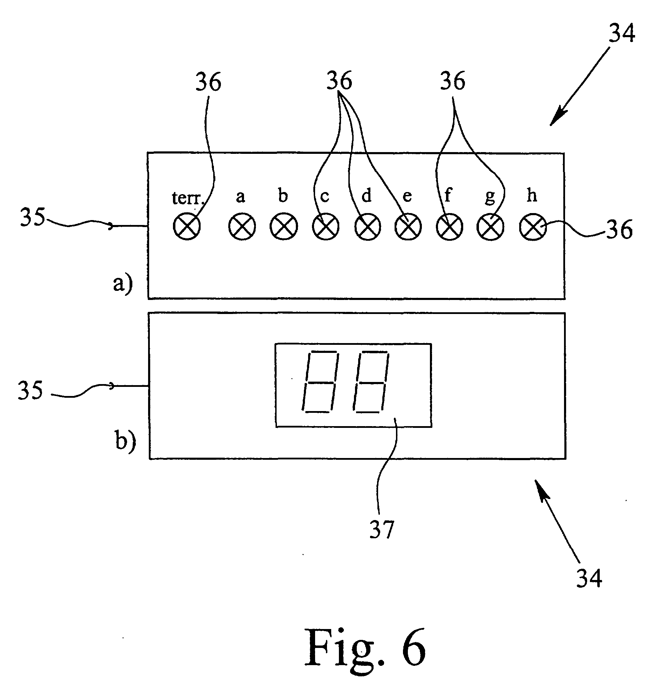

Bei einer weiteren alternativen Ausgestaltung der erfindungsgemäßen Satellitenempfangsanlage 2, die im fertig installierten Zustand der in Fig. 2 dargestellten Satellitenempfangsanlage 2 entspricht, wird als Installationshilfe ein in Fig. 6 dargestellter Leistungsindikator 34 verwendet. Der Leistungsindikator 34 entspricht in seiner Funktion im wesentlichen der Indiktoreinrichtung 32, wobei der Leistungsindikator 34 jedoch nicht in dem Multischalter-Stranggerät 8 integriert ist, sondern als separates Bauteil ausgeführt ist.

Die beiden in Fig. 6a bzw. Fig. 6b dargestellten Ausführungsformen des Leistungsindikators 34 weisen jeweils einen Eingang 35 auf, an den nacheinander eine Leitung 11 angeschlossen wird. Aufgrund der unterschiedlichen Identifikationssignale auf den unterschiedlichen Leitungen 11 wird von dem Leitungsindikator 34 erkannt, mit welchem Ausgang 7 des Multischalter-Kopfgeräts 1 die jeweilige Leitung 11 verbunden ist, was durch ein Aufleuchten der entsprechenden LED 36 angezeigt wird. Anstelle eine der Leitungen 11 kann an den Eingang 35 des Leitungsindikators 34 natürlich auch die terrestische Leitung 30 angeschlossen werden, was dann durch ein Aufleuchten der entsprechenden LED 36 angezeigt wird. Durch den Leitungsindikator 34 wird dem Installateur somit angezeigt, an welchen Eingang 22 bzw. 26 des Multischalter-Stranggeräts 8 die gerade überprüfte Leitung 11 bzw. 30 angeschlossen werden muß. Bei einer alternativen Ausgestaltung des Leitungsindikators 34, wie er in Fig. 6b dargestellt ist, weist der Leitungsindikator 34 ein LCD-Display 37 auf, das jeweils die Nummer des Eingangs 22 anzeigt, an den die gerade überprüfte Leitung 11 angeschlossen werden muß.

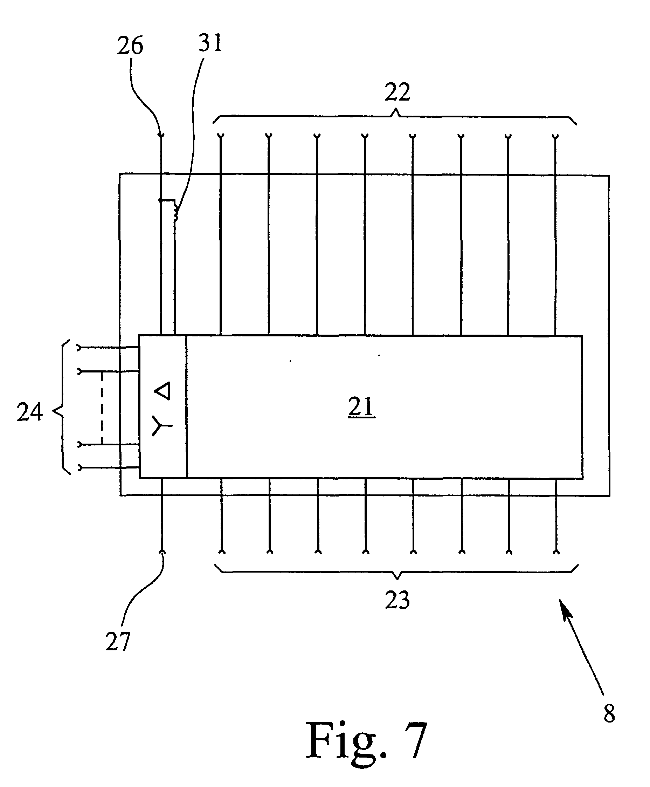

Bei einer erfindungsgemäßen Satellitenempfangsanlage 2, bei der die richtige Zuordnung der jeweiligen Leitungen 11 bzw. 30 mit Hilfe eines Leitungsindikators 34 festgestellt und angezeigt wird, haben die Multischalter-Stranggeräte 8 den in Fig. 7 dargestellten Aufbau. Da der Leitungsindikator 34 die Funktion der Indikatoreinrichtung 32 des in Fig. 5 dargestellten Multischalter-Stranggeräts 8 ersetzt, ist bei dem in Fig. 7 dargestellten Multischalter-Stranggerät 8 eine solche Indikatoreinrichtung 32 nicht vorhanden.

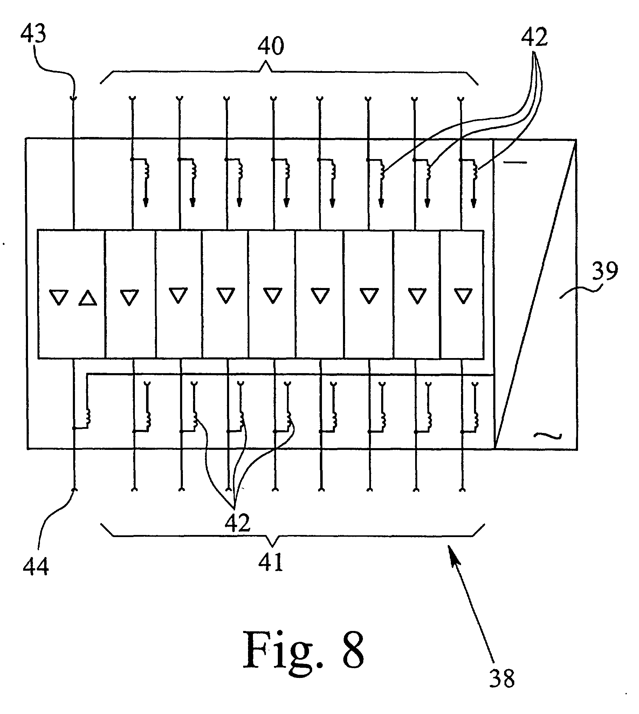

Schließlich zeigen die Fig. 2 und 4, daß die dort dargestellten Satellitenempfangsanlagen 2 in ihrem Kaskadenstamm außer dem Multischalter-Kopfgerät 1 und je zwei Multischalter-Stranggeräten 8 noch einen zwischen die beiden Multischalter-Stranggeräte 8 geschalteten Verstärker 38 aufweisen. Ein solcher Verstärker 38 ist schematisch in Fig. 8 dargestellt. Der Verstärker 38 weist eine Spannungsversorgungseinrichtung 39, insgesamt acht Eingänge 40, und acht Ausgänge 41 auf. Die Eingänge 40 werden über entsprechende Leitungen 11 mit den Ausgängen 23 des ersten Multischalter-Stranggeräts 8 und die Ausgänge 41 über Leitungen 11 mit den entsprechenden Eingängen 22 des zweiten Multischalter-Stranggeräts 8 verbunden. Damit in dem Verstärker 38 nur die Nutzsignale verstärkt werden und die Identifikationssignale auf den einzelnen Leitungen 11 auch nach der Verstärkung unverändert vorliegen, sind die Eingänge 40 und die Ausgänge 41 des Verstärkers 38 über Drosselspulen 42 niederfrequent miteinander gekoppelt.

Schließlich weist der Verstärker 38 noch einen terrestischen Eingang 43 und einen terrestischen Ausgang 44 zum Anschließen einer terrestischen Leitung 30 auf.

## Patentansprüche

1. Multischalter-Kopfgerät für eine Satellitenempfangsanlage (2) zum Anschluß mehrerer Teilnehmer an mindestens eine Satellitenantenne (3), mit mehreren Eingängen (4) zum Anschließen mindestens eines Konverters (5), mit einer Umschaltmatrix (6), mit mehreren Ausgängen (7) zum direkten oder indirekten Verbinden des Multischalter-Kopfgeräts (1) mit einem Multischalter-Stranggerät (8) und mit mehreren Anschlüssen (9) zum Anschließen der einzelnen Teilnehmer, **dadurch gekennzeichnet, daß** dem Multischalter-Kopfgerät (1) eine Leitungs-Identifikationseinheit (10) zugeordnet ist und die Leitungs-Identifikationseinheit (10) Identifikationssignale auf an den Ausgängen (7) angeschlossene Leitungen (11) schaltet.

2. Multischalter-Kopfgerät nach Anspruch 1, **dadurch gekennzeichnet, daß** die Identifikationssignale aus Gleichspannungssignalen, niederfrequenten Wechsel- oder Pulsspannungen oder niederfrequenten Datentelegrammen bestehen.

3. Multischalter-Kopfgerät nach Anspruch 1 oder 2, **dadurch gekennzeichnet, daß** zum Aufschalten der Identifikationssignale auf die an den Ausgängen (7) angeschlossene Leitungen (11) Drosselspulen (12) vorgesehen sind.

4. Multischalter-Kopfgerät nach einem der Ansprüche 1 bis 3, **dadurch gekennzeichnet, daß** dem Multischalter-Kopfgerät (1) eine Spannungsversorgungseinrichtung (13) zugeordnet ist.

5. Multischalter-Kopfgerät nach einem der Ansprüche 1 bis 4, **dadurch gekennzeichnet, daß** das Multischalter-Kopfgerät (1) eine Versorgungseinheit (14) zum Ansteuern eines schaltbaren Konverters (5) aufweist.

6. Multischalter-Kopfgerät nach einem der Ansprüche 1 bis 5, **dadurch gekennzeichnet, daß** ein terrestischer Eingang (17) zum Anschließen eines terrestischen Signals und ein terrestischer Ausgang (18) zum Weiterleiten des terrestischen Signals vorgesehen ist.

7. Satellitenempfangsanlage zum Anschluß mehrerer Teilnehmer an mindestens eine Satellitenantenne (3), mit mindestens einem Konverter (5), mit einem eine Umschaltmatrix (6) aufweisenden Multischalter-Kopfgerät (1), insbesondere nach einem der Ansprüche 1 bis 6, und mit mindestens einem eine Umschaltmatrix (21) aufweisenden Multischalter-Stranggerät (8), wobei die einzelnen Ausgänge (7) des Multischalter-Kopfgeräts (1) über einzelne Leitungen (11) mit den einzelnen Eingängen (22) des Multischalter-Stranggeräts (8) direkt oder indirekt verbindbar sind, **dadurch gekennzeichnet, daß** das Multischalter-Kopfgerät (1) eine Leitungs-Identifikationseinheit (10) aufweist und durch die Leitungs-Identifikationseinheit (10) Identifikationssignale an den einzelnen Ausgängen (7) des Multischalter-Kopfgeräts (1) auf die Leitungen (11) aufschaltbar sind.

8. Satellitenempfangsanlage nach Anspruch 7, **dadurch gekennzeichnet, daß** jedes Multischalter-Stranggerät (8) eine Auswerteelektronik (25) aufweist, die Auswerteelektronik (25) einerseits mit den Eingängen (22) und andererseits mit der Umschaltmatrix (21) des Multischalter-Stranggeräts (8) verbunden ist und die Auswerteelektronik (25) die Identifikationssignale der an den Eingängen (22) angeschlossenen Leitungen (11) erfaßt und aufgrund der unterschiedlichen Identifikationssignale die Konfiguration der angeschlossenen Leitungen (11) ermittelt.

9. Satellitenempfangsanlage nach Anspruch 7 oder 8, **dadurch gekennzeichnet, daß** jedes Multischalter-Stranggerät (8) einen terrestischen Eingang (26) zum Anschließen eines terrestischen Signals und eine dem terrestischen Eingang (26) zugeordnete Anzeigeeinrichtung (28) aufweist.

10. Satellitenempfangsanlage nach Anspruch 7, **dadurch gekennzeichnet, daß** jedes Multischalter-Stranggerät (8) eine Indikatoreinrichtung (32) aufweist, die Indikatoreinrichtung (32) mit den Eingängen (22) des Multischalter-Stranggeräts (8) verbunden ist und die Indikatoreinrichtung (32) die einzelnen Identifikationssignale der an den Eingängen (22) angeschlossenen einzelnen Leitungen (11) erfaßt und ein Zuordnungssignal abgibt.

11. Satellitenempfangsanlage nach Anspruch 10, **dadurch gekennzeichnet, daß** jedem Eingang (22) des Multischalter-Stranggeräts (8) ein Zuordnungselement, insbesondere eine LED (33), zugeordnet ist.

12. Satellitenempfangsanlage nach Anspruch 10, **dadurch gekennzeichnet, daß** die Indikatoreinrichtung (32) nur ein Zuordnungselement, insbesondere eine LED (33) oder ein Display, aufweist und das Zuordnungselement über ein Schaltelement wahlweise mit den einzelnen Eingängen (22) des Multischalter-Stranggeräts (8) verbindbar ist.

13. Satellitenempfangsanlage nach einem der Ansprüche 7 bis 12 mit mindestens zwei Multischalter-Stranggeräten (8), **dadurch gekennzeichnet, daß** zwischen zwei Multischalter-Stranggeräten (8) ein Verstärker (38) geschaltet ist und der Verstärker (38) eine Spannungsversorgungseinrichtung (39), mehrere Eingänge (40) und mehrere Ausgänge (41) aufweist.

14. Satellitenempfangsanlage nach Anspruch 13, **dadurch gekennzeichnet, daß** die Eingänge (40) des Verstärkers (38) mit den entsprechenden Ausgängen (41) niederfrequent gekoppelt sind.

15. Verfahren zur Installation einer Satellitenempfangsanlage, bestehend aus mindestens einem Konverter, einem eine Umschaltmatrix aufweisenden Multischalter-Kopfgerät, insbesondere nach einem der Ansprüche 1 bis 6, und aus mindestens einem eine Umschaltmatrix aufweisenden Multischalter-Stranggerät, wobei die einzelnen Ausgänge des Multischalter-Kopfgeräts über einzelne Leitungen mit den einzelnen Eingängen des Multischalter-Stranggeräts direkt oder indirekt verbunden werden können, **dadurch gekennzeichnet, daß** den einzelnen an den Ausgängen des Multischalter-Kopfgeräts angeschlossenen Leitungen jeweils ein von einer Leitungs-Identifikationseinheit erzeugtes Identifikationssignal aufgeschaltet wird.

16. Verfahren nach Anspruch 15, **dadurch gekennzeichnet, daß** die Leitungen an die Eingänge eines Multischalter-Stranggeräts angeschlossen werden, die Konfiguration der Leitungen in einer Auswerteelektronik in dem Multischalter-Stranggerät aufgrund der unterschiedlichen Identifikationssignale auf den unterschiedlichen Leitungen erkannt wird und diese Konfiguration der Leitungen in der Umschaltmatrix des Multischalter-Stranggeräts berücksichtigt wird.

17. Verfahren nach Anspruch 15, **dadurch gekennzeichnet, daß** die Leitungen an die Eingänge eines Multischalter-Stranggeräts angeschlossen werden und eine mit den Eingängen verbundene Indikatoreinrichtung im Multischalter-Stranggerät ein Zuordnungssignal abgibt, wenn eine Leitung mit dem richtigen Eingang am Multischalter-Stranggerät verbunden wird.

18. Verfahren nach Anspruch 15, **dadurch gekennzeichnet, daß** die Leitungen nacheinander an einen Eingang eines Leitungsindikators angeschlossen werden und der Leitungsindikator aufgrund der unterschiedlichen Identifikationssignale auf den unterschiedlichen Leitungen erkennt, mit welchem Ausgang des Multischalter-Kopfgeräts die jeweilige Leitung verbunden ist, und ein entsprechendes Signal anzeigt.

19. Verfahren nach Anspruch 15, **dadurch gekennzeichnet, daß** die Leitungen nacheinander an einen Eingang eines Leitungsindikators angeschlossen werden und der Leitungsindikator aufgrund der unterschiedlichen Identifikationssignale auf den unterschiedlichen Leitungen ein dem jeweiligen Identifikationssignal proportionales Signal anzeigt.
